# EUROPEAN PATENT APPLICATION

(11) **EP 1 093 097 A2**
(43) Date of publication of application: **18.04.2001**
(21) Application number: 00308890.3
(22) Date of filing: 09.10.2000
(51) Int. Cl.: G07F 19/00, H04L 29/06

(54) **System and method for providing secure financial transactions**

(30) Priority: 14.10.1999 US 417645
(71) Applicant: International Business Machines Corporation, Armonk, NY 10504 (US)
(72) Inventor: Maes, Stephane H., IBM United Kingdom Ltd., Winchester, Hampshire SO21 2JN (GB); Sedivy, Jan, IBM United Kingdom Ltd., Winchester, Hampshire SO21 2JN (GB)
(74) Representative: Burt, Roger James, Dr.

(57) **Abstract**

A system and method for providing secure financial transactions employing a simplified purchase information exchange protocol that eliminates the need for integrating the business logic of a vendor and consumer (or consumer service provider) to process and authenticate a financial transaction. In one aspect, a method for performing a financial transaction comprises the steps of: commencing a financial transaction between a vendor and a consumer; receiving transaction information from the vendor based on the financial transaction, the transaction information comprising a unique identification tag associated with the vendor; providing the received transaction information to a first service provider associated with the consumer; authorizing the financial transaction by the first service provider and a second service provider associated with the vendor using the unique identification tag; and confirming the authorizing of the financial transaction. The unique identification tag comprises a unique vendor (or transaction terminal) identification number that is pre-assigned to the vendor. The unique identification tag may further comprise encoded information that indicates the location of the vendor or transaction terminal, the nature of the financial transaction, and/or amount due for the financial transaction.

## Description

The present application relates generally to a system and method for providing secure financial transactions such as POS (point of sale) and vending service payment transactions and, more particularly, a system and method employing a simplified purchase information exchange protocol between a vendor and consumer that eliminates the need for integrating the business logic of the vendor and consumer (or consumer service provider) to process and authenticate a transaction.

Conventionally, to perform a transaction at a vending machine, a consumer may input either cash or a financial card (e.g., debit card, smart card, universal card, ATM card, credit card, etc.) into a slot of the vending machine to provide payment for a particular item or service. Similarly, at a point of sale (POS), an individual may present either cash or a check in exchange for merchandise, or sweep his/her financial card through a POS terminal as necessary. In the case of remote financial transactions over the telephone or the Internet, the consumer can provide credit card information to a secure server using, e.g., DTMF (Dual Tone Multi-Frequency) communication, voice dialogs with either a machine, e.g., IVR (Interactive Voice Response) or human operators, and/or GUI (graphical user interface) form filling.

Indeed, the current trend in moving towards a "cashless society" has resulted in a substantial increase in the use of financial cards to perform consumer transactions. Moreover, this trend has exacerbated the need for immediate peer-to-peer cashless payments (e.g., to pay an individual for an item or service purchased from the individual's (non- commercial) home page). Various conventional devices such as electronic wallets, for example, have been proposed for allowing consumers to perform cashless, secure transactions. Some electronic wallets provide the capability to directly connect to a POS terminal and/or central server of a service provider via, e.g., wireless communication, dial-up connections over the PSTN (public switched telephone network) in conjunction with DTMF, and a dedicated computer interface using, for example, TCP/IP to communicate with the remote server.

To provide security for remote consumer transactions (e.g., using electronic wallets or over the Internet), various methods or protocols have been proposed such as digital signature and digital certificate security and SET (Secure Electronic Transactions) for providing security and vendor/consumer authentication and verification. In particular, SET is a protocol that was developed to ensure the security of remote financial transactions over the Internet, for example. Using SET, a financial transaction can be conducted and verified between a consumer, and vendor, and the consumer's service provider or banking institution using both digital certificate and digital signature technology.

More particularly, according to the SET protocol, the banking institution or third-party service provider of the consumer will issue a digital certificate to the consumer and the vendor. The digital certificates, in general, may contain information such as the name of the person to whom it was issued, a serial number, an expiration date, a public key, and/or the digital signature of the issuing authority (e.g., the consumer's banking institution/service provider). For processing a remote financial transaction, the client device of the consumer must be running a local program that is capable of encrypting and processing all the information exchanged with the vendor. The vendor must first provide all the transaction information and then provide the digital certificate to the consumer so that the consumer can verify/authenticate the vendor. The vendor authentication process may also be performed by the consumer's bank or service provider.

Upon vendor authentication, the consumer will transmit a purchase order to the vendor (which is encrypted with the vendor's public key), as well as an encrypted credit card authorization (which the vendor can not decode) . The vendor then forwards this information to the consumer's service provider or banking institution for verification. Upon acceptance from the bank, the vendor receives an authorization notification. The transaction is then performed and an e-receipt is sent to the consumer.

As illustrated above, the SET protocol is complex and requires digital connection between the consumer and the vendor. Consequently, to use the SET protocol, the vendor must have the infrastructure to process the handshake with the e-wallet (digital certificate) of the consumer, to track the consumer's order, to determine the consumer's banking institution or service provider, and to forward the information to the bank or service provider and wait for the confirmation.

It would be advantageous to have a protocol that provides secure financial transactions without requiring a complex digital exchange as required by conventional protocols such as SET. Accordingly, a protocol that is capable of simplifying a purchase information exchange while providing security for remote transaction, but which is compatible with the existing infrastructure, is highly desirable.

The present invention is directed to a system and method which seeks to provide secure financial transactions employing a simplified purchase information exchange protocol that eliminates the need for integrating the business logic of a vendor and consumer (or consumer service provider) to process and authenticate a financial transaction.

According to a first aspect of the present invention, a method for performing a financial transaction comprises the steps of:
commencing a financial transaction between a vendor and a consumer;
receiving transaction information from the vendor based on the financial transaction, the transaction information comprising a unique identification tag associated with the vendor;
providing the received transaction information to a first service provider associated with the consumer;
authorizing the financial transaction by the first service provider and a second service provider associated with the vendor using the unique identification tag; and
confirming the authorizing of the financial transaction.

In the method of this first aspect the step of confirming the authorizing of the financial transaction may comprise the steps of:
issuing a confirmation number by the second service provider upon the authorizing of the financial transaction;
providing the confirmation number to the consumer and to the vendor;
comparing, by the vendor, the confirmation number provided to the consumer with the confirmation number provided to the vendor; and
completing the financial transaction if the confirmation numbers provided to the vendor and consumer are similar.

As an alternative, the step of confirming the authorizing of the financial transaction may comprise the steps of:
issuing a confirmation number by the second service provider upon the authorizing of the financial transaction;
providing the consumer with the confirmation number;
providing the confirmation number to the vendor from the consumer;
contacting the second service provider by the vendor to confirm the authenticity of the confirmation number provided by the consumer; and
completing the financial transaction by the vendor if the confirmation number is deemed authentic by the second service provider.

In this first aspect, the step of authorizing the financial transaction may comprise the steps of:
verifying the vendor using the unique identification tag provided by the consumer; and
exchanging funds between an account of the vendor and an account of the consumer based on the transaction information, if the vendor is verified.

As an alternative, the step of authorizing the financial transaction may comprise the steps of:
verifying the vendor using the unique identification tag provided by the consumer; and
providing a guarantee of payment to the account of the vendor upon completion of the financial transaction.

This step of providing guarantee of payment may comprise placing a specified amount of funds from the account of the consumer in escrow.

Further the method may comprise the steps of:
generating by the vendor an encoded identification number comprising an amount due upon completion of the financial transaction; and
settling the amount of funds in escrow using the encoded identification number.

This method may further comprise the step of forfeiting the amount of funds in escrow to the vendor if the step of settling is not performed within specified time period.

In this first aspect method the vendor and the consumer may both be individuals and the financial transaction comprises payment of a personal debt between the individuals.

According to a second aspect of the present invention, a method for performing a financial transaction, comprises the steps of:
requesting by a consumer a financial transaction with a transaction terminal;
transmitting transaction information from the transaction terminal to a communication device of the consumer based on the requested financial transaction, the transaction information comprising a unique identification tag associated with the transaction terminal;
transmitting the transaction information from the communication device to a first service provider associated with the consumer;
authorizing the financial transaction by the first service provider and a second service provider associated with the transaction terminal using the unique identification tag; and
confirming the authorizing of the financial transaction.

In this second aspect method the step of confirming the authorizing of the financial transaction may comprise the steps of:
issuing a confirmation number by the second service provider upon the authorizing of the financial transaction;
automatically transmitting the confirmation number to the communication device of the consumer and to the transaction terminal;
comparing, by the transaction terminal, the confirmation number transmitted to the communication device of the consumer with the confirmation number transmitted to the transaction terminal; and
completing the financial transaction if the confirmation numbers transmitted to the transaction terminal and the communication device are similar.

As an alternative, the step of confirming the authorizing of the financial transaction may comprise the steps of:
issuing a confirmation number by the second service provider upon the authorizing of the financial transaction;
transmitting the confirmation number to one of the communication device of the consumer, the first service provider, and both;
relaying the confirmation number from one of the communication device and first service provider to the transaction terminal;
contacting the second service provider by the transaction terminal to confirm the authenticity of the confirmation number transmitted by one of the communication device and the first service provider of the consumer; and
completing the financial transaction by the transaction terminal if the confirmation number is deemed authentic by the second service provider.

The step of authorizing the financial transaction in this second aspect may comprise the steps of:
verifying the transaction terminal using the unique identification tag transmitted from the communication device of the consumer; and
exchanging funds between an account associated with the transaction terminal and an account of the consumer based on the transaction information, if the transaction terminal is verified.

As an alternative the step of authorizing the financial transaction may comprise the steps of:
verifying the transaction terminal using the unique identification tag transmitted from the communication device of the consumer; and
providing a guarantee of payment to the account associated with the transaction terminal upon completion of the financial transaction.

This step of providing guarantee of payment may omprise placing a specified amount of funds from the account of the consumer in escrow.

Additionally this method may further comprise the steps of:
generating by the transaction terminal an encoded identification number comprising an amount due upon completion of the financial transaction; and
settling the amount of funds in escrow using the encoded identification number.

Also the method may further comprise the step of forfeiting the amount of funds in escrow to the account associated with the transaction terminal if the step of settling is not performed within a specified time period.

In accordance with a third aspect of the present invention a system for performing a financial transaction, comprising:
a transaction terminal for commencing a financial transaction at the request of a consumer and providing transaction information to the consumer based on the financial transaction, the transaction information comprising a unique identification tag associated with the transaction terminal;
at least one server associated with a service provider of the consumer and the transaction terminal; and
a communication device for transmitting the transaction information to the at least one server, wherein the at least one server comprises means for authorizing the financial transaction using the unique identification tag and means for issuing a confirmation number for an authorized transaction.

In accordance with an aspect of the present invention, a vending machine or POS terminal (transaction terminal) may directly transmit the transaction information to a communication device of the consumer.

The unique identification tag can comprise a unique vendor (or transaction terminal) identification number that is pre-assigned to the vendor. The unique identification tag may further comprise encoded information that indicates the location of the vendor or transaction terminal, the nature of the financial transaction, and/or the amount due for the requested financial transaction.

Using that information, the consumer can contact his/her service provider or bank using a communication device (e.g. a regular phone or smartphone), provide such information to the bank/service provider, and authorize the transaction with an appropriate authentication procedure. The information provided by the unique identification tag can be used by the service provider/bank of the consumer to contact the service provider/bank of the vendor (via DTMF or speech/dialog or a combination thereof) and confirm the identity of the vendor/vending machine service. Upon authentication and after having received the transaction order, the service provider/bank of the vendor will issue a confirmation number (i.e., a unique authorization code) to confirm that payment has been made for the requested transaction and that the purchase/service may be provided to the consumer.

The procedure may be performed in a synchronous mode, wherein the vendor automatically receives confirmation of the payment transaction so that no other transaction is required. Alternatively, the procedure can be performed in an asynchronous mode, whereby the confirmation number is provided to the consumer who then enters/provides such code to the vending machine/vendor to complete the transaction.

These and other aspects, features and advantages of the present invention will be described and become apparent from the following detailed description of presently preferred embodiments, by way of example, with reference to the accompanying drawings, in which:
Fig. 1 is a block diagram of a system for performing a synchronous financial transaction according to an embodiment of the present invention;
Fig. 2 is a flow diagram of a method for performing a synchronous financial transaction according to one aspect of the present invention;
Fig. 3 is a flow diagram of a method for performing a synchronous financial transaction according to another aspect of the present invention;
Figs. 4A and 4B are diagrams of a preferred network topology that may be employed in accordance with the illustrative embodiment of Fig. 1;
Fig. 5 is a diagram of a system for performing an asynchronous financial transaction according to an embodiment of the present invention;
Fig. 6 is a flow diagram of a method for performing an asynchronous financial transaction according to one aspect of the present invention; and
Fig. 7 is a flow diagram of a method for performing an asynchronous financial transaction according to another aspect of the present invention.

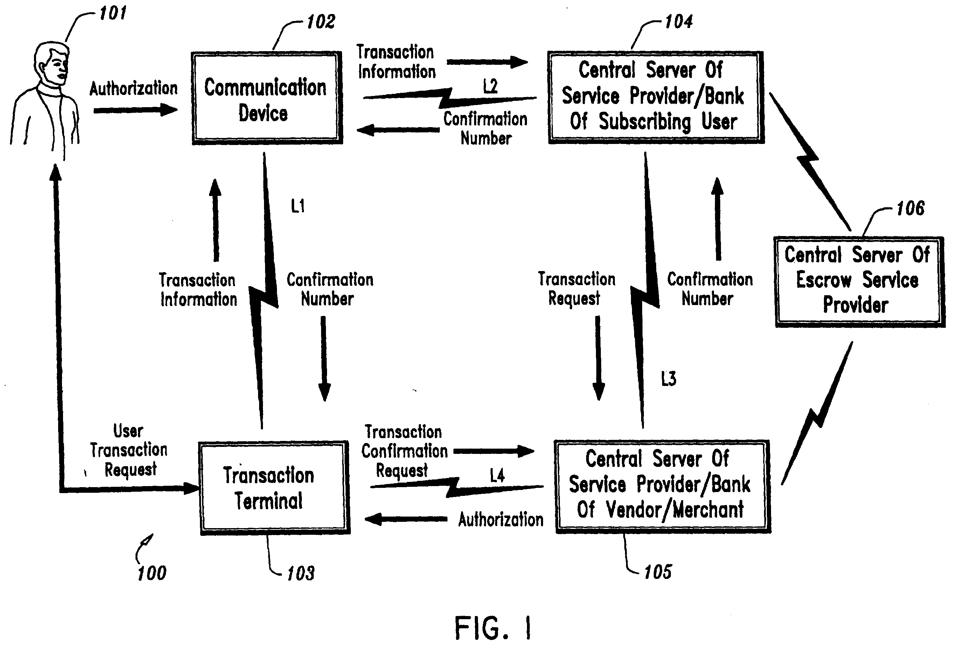

Referring now to Fig. 1, a block diagram illustrates a system for performing a synchronous financial transaction according to an embodiment of the present invention. The system 100 comprises a communication device 102 for establishing communication (via link L1) with a transaction terminal 103 (such as an electronic fund transfer (EFT) system, automatic teller machine (ATM), vending machine, point of sale (POS) terminal, etc.) It is to be understood that the communication device 102 may be any device such as a portable communication device (e.g., smartphone, PDA (personal digital assistant)) having suitable architecture for establishing direct communication with the transaction terminal 103. In addition, the communication device 102 may be any non-portable device such as a PC (personal computer) that is capable of performing telephony and Internet financial transactions with a remote transaction terminal. It is to be further understood that the transaction terminal 103 can be a portable communication device similar to the consumer's communication device 102, but which belongs to the vendor (e.g. both devices 102 and 103 can a smartphone). Indeed, this is especially applicable in the case of individual-to-individual cashless transactions as discussed below.

The transaction terminal 103 transmits transaction information to the communication device 102 (via link L1) in response to a transaction request from a consumer 101. In accordance with one aspect of the present invention, the transaction information comprises a unique identification (ID) tag (or unique identifier) that is associated with the particular vendor or transaction terminal and, possibly, the particular service or transaction requested by the consumer. More specifically, the unique ID tag comprises a unique vendor identification number (or vendor ID number). The vendor ID number can be any identification or number scheme such as an account number, phone number, IP (Internet protocol) address, registration number, etc.

The unique ID tag may further comprise information such as the location of the transaction terminal 103, the nature/type of the requested service/transaction, and/or the amount due. The location information can be any identification scheme such as GSP (global system positioning) coordinates of the transaction terminal 103 or any other address provided by the POS such as a zip code, phone number, IP address, etc. The requested service or transaction may be identified using any suitable coding scheme such as a coding scheme similar to bar code numbers of a product. It is to be appreciated that a different unique ID tag can be provided to represent each type of transaction or service offered by the transaction terminal 103. In addition, the unique identification tag can be independent of the transaction such as, in the simplest case, where only one service is provided (e.g., car wash or soda dispensing machine).

The communication device 102 can establish communication (via communication link L2) with a central server system 104 associated with a service provider or bank of the subscribing consumer 101. The transaction information (including the unique ID tag) received by the communication device 102 from the transaction terminal 103 is transmitted to the central server 104 via communication link L2. The central server 104, in turn, connects (via communication link L3) to a central server system 105 associated with a service provider or bank of the vendor that is affiliated with the transaction terminal 103. The central server 104 transmits a transaction request (including the unique ID tag) to the central server 105 which then processes the request and generates a confirmation number if the transaction is authorized and payment is made. The confirmation number may be transmitted to the transaction terminal 103 via links L3, L2 and L1. Alternatively, the central server 104 can transmit the confirmation number directly to the transaction terminal 103. The transaction terminal 103 can also connect to the central server 105 to request confirmation that the confirmation number is authentic.

The system 100 may also comprise a central server 106 associated with an escrow service provider, which may be used in certain instances when the consumer's service provider/bank places an amount of money (debited from the consumer's account) in escrow to guarantee payment after a transaction is performed (as opposed to transferring the funds to the vendor's account before the transaction is complete and satisfactory to the consumer). This escrow modality will be explained in greater detail below.

It is to be understood that in certain instances, the consumer's service provider/bank 104 and the vendor's service provider/bank 105 may be the same entity (as opposed to separate entities as illustrated in Fig. 1). A typical example of when the consumer and vendor's service provider can be single entity (i.e., 104 =105) would be a situation where the consumer would call a phone number provided by the vendor to authorize (at that number) the transaction via payment through a dialog with a machine or operator (i.e., a call center or IVR associated with the vendor). In addition, the escrow service provider 106 may be a single entity (as illustrated in Fig. 1) or combined into a single entity with either the service provider/bank of the consumer or vendor (or both) (although it is preferred that the escrow service provider be an independent third-party).

It is to be further understood that communication links L1-L4 in Fig. 1 can be established using conventional communication means and involve secure communication. For instance, communication link L1 can be established wirelessly via RF (radio frequency) and IF (infrared) communication. Link L2 may also be established wirelessly via RF or over any telephone (landline or wireless) or digital communication line and such communication can be performed via voice in a conversation with an operator or machine (IVR) on the service provider side and/or via DTMF. In addition, communication links L3 and L4 (as well as the communication between the escrow service provider 106 and service providers 104, 105) can be established by dial-up connections through a telephone line via a modem over the Internet, an intranet or a local area network, or direct network socket connections using TCP/IP, etc. Furthermore, any suitable conventional communication method for providing secure communications over links L1-L4 may be employed such as SSL (secure socket layer) connections, WSL (WAP (wireless application protocol) secure layer) connections, secure tunneling, encrypted communications, etc.

Although conventional network topologies can be employed in connection with the system of Fig. 1, a preferred network topology is one that provides spontaneous dynamic networking (i.e., a network which is spontaneously built between devices that are within a certain communication range). Such spontaneous networking may be implemented using the currently emerging "Bluetooth" networking protocol as described, for example, at **http://www.bluetooth.com.** Briefly, Bluetooth is a codename for network protocol that provides *ad hoc,* wireless network connectivity. More particularly, Bluetooth is a protocol for providing short-range wireless radio links between Bluetooth-enabled devices (such as smartphones, cellular phone, pagers, PDAs, laptop computers, mobile units, etc.)

Referring to Fig. 4a, in general, it is proposed that each Bluetooth enabled device will comprise a small, high performance, low-power, integrated radio transceiver chip 400 comprising a baseband controller 401 for processing input/output baseband signals using a frequency-hop spread-spectrum system, as well as a modulator/demodulator for modulating/demodulating a carrier frequency 402 in the ISM (industrial-scientific-medical) band at 2.4 GHz. It is further proposed that each Bluetooth-enabled device will have a unique 48-bit address from the IEEE 802 standard, In addition, Bluetooth-enabled devices will have the ability to automatically detect other Bluetooth-enabled devices using Bluetooth protocols, so that such devices can automatically decide whether or not to open channels of communication and transfer data between each other.

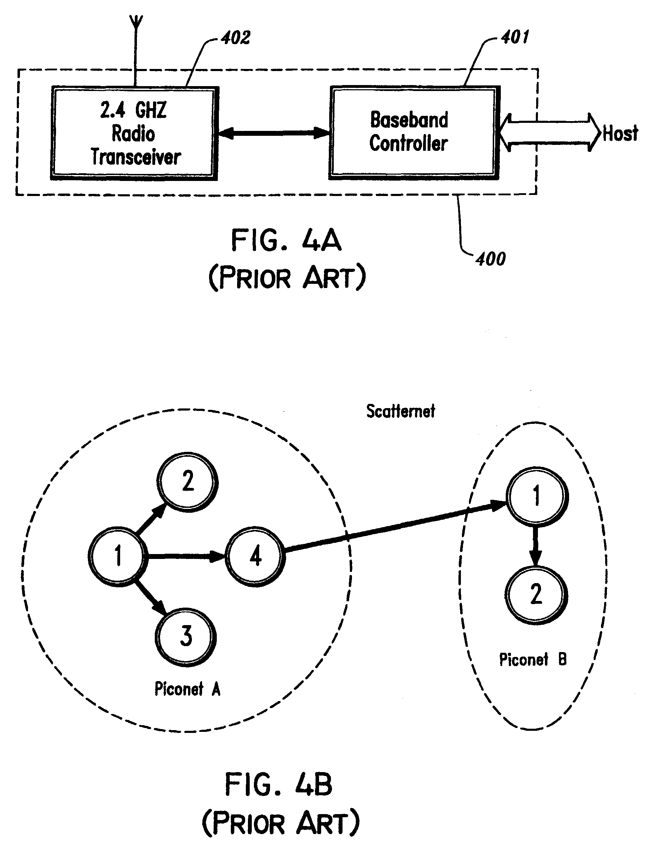

Referring to Fig. 4b, a piconet (e.g., Piconet A and Piconet B) refers to a collection of Bluetooth-enabled devices (nodes) connected in an *ad hoc* manner (represented as nodes 1-4 comprising Piconet A, and nodes 1-2 comprising Piconet B), with one node in each Piconet acting as master (node 1 in Piconets A and B) and the remainder as slaves for the duration of the piconet connection. The master node is the device whose clock and hopping sequence are used to synchronize all other nodes (devices) in a given piconet. Bluetooth supports point-to-point and point-to-multipoint connections. Consequently, several individual and non- synchronized Piconets can be linked together *ad hoc* to form what is referred to as a "Scatternet" where each piconet is identified by a different hopping sequence. This allows nodes (the devices) to act as bridges to remote nodes to create networks and transmit and receive information between remote devices and networks. The Bluetooth standard also provides built in encrypting and verification for providing secure communication between dynamically connected network devices.

It is to be appreciated, therefore, that the Bluetooth network topology can be implemented in accordance with the system depicted in Fig. 1. In this configuration, transaction information (including the unique ID tag) and the confirmation number (discussed above) can be dynamically and spontaneously transmitted between the transaction terminal 103 and the communication device 102 (assuming they have the proper Bluetooth architecture) as well as other remotely scattered nodes to reach Bluetooth-enabled access points of networks, e.g., intranet, LAN, etc., to which the central servers 104, 105, and 106 are connected. Such a networking topology is in line with the idea that, in the near future, people will be carrying one smartphone device and be constantly locally and remotely connected (i.e., dynamic spontaneous networking).

It is to be appreciated that any spontaneous dynamic networking protocol may be implemented in accordance with the present invention. For example, the network topology of Fig. 1 may be implemented in accordance with the "hopping" communication network described in U.S. Patent Application Serial No. 09/198,378, filed on November 24, 1998, entitled "Automated Traffic Mapping," which is incorporated herein by reference. Briefly, with the network topology of above-incorporated U.S. Serial No. 09/198,378, a plurality of neighboring mobile units having unique IDs (e.g., mobile IP addresses) that are within a certain proximity to each other can form a local area network. A mobile unit that is not within range of a central station can have information relayed to the central station by "hopping" from one mobile unit to another until the information is received by a remote mobile unit that is within the vicinity of the central station. The routing across reachable mobile units is prioritized based on a "hopping distance" (i.e., how many "hops" the mobile unit is away from the central server).

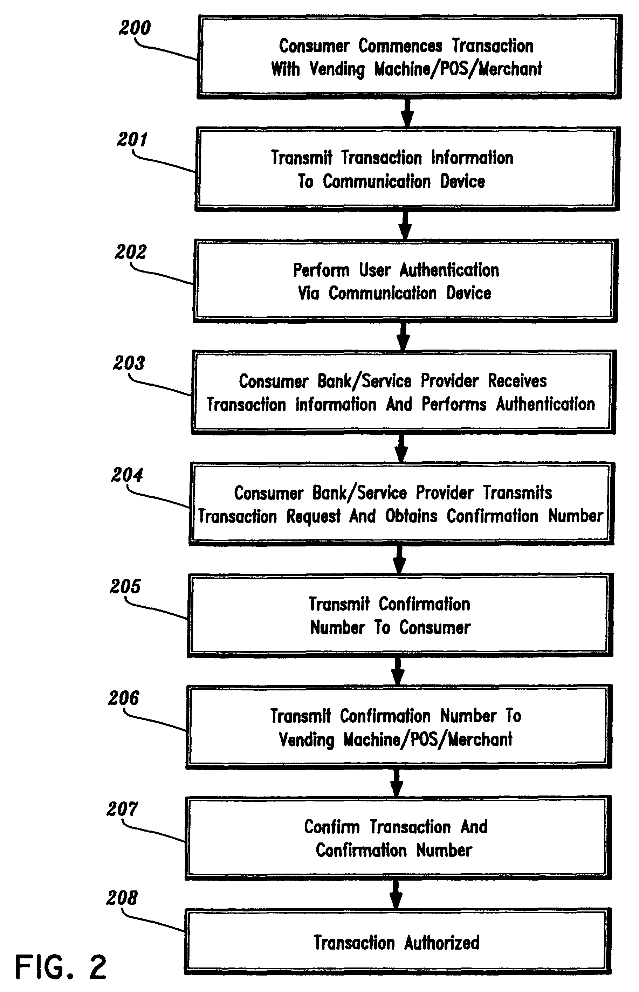

Referring now to Fig. 2, a flow diagram illustrates a method for performing a synchronous financial transaction according to one aspect of the present invention. In particular, it is assumed (tor purposes of illustration) that the communication device is a portable smartphone device and that the synchronous process depicted in Fig. 2 is employed using a dynamic and spontaneous networking topology such as the Bluetooth or "hopping" topologies described above (or any other suitable dynamic spontaneous topologies) to transmit information between the communication device, transaction terminal and central servers. Initially, a consumer will commence a purchase transaction with a transaction terminal of a vendor (step 200) . By way of example, a consumer needing petroll for his car may commence a petrol purchase transaction by entering a desired amount of petrol on a keypad terminal located on the petrol pump (alternatively, with respect to an escrow modality as described below, the amount may not be specified prior to the transaction although a maximum default amount may be applied equivalent to the maximum expected amount of one transaction). Then, the transaction terminal (being dynamically wirelessly connected with the communication device) will transmit the transaction information (including the unique ID tag) to the communication device (e.g., smartphone) (step 201). As explained above, the transaction information includes a unique ID tag comprising information such as the unique vendor ID number and, possibly, the requested dollar amount for the petrol. It is to be appreciated that the amount due for a particular purchase or service may be expressly communicated by the consumer upon the authorization of the payment (as discussed below). In such case, the confirmation number issued by the vendor (discussed below) will include the amount (or ordered item code) for the requested item or service.

Next, referring again to Fig. 2, a biometric verification process such as speaker identification may be performed via the communication device (smartphone) so as to verify the identity of the consumer (step 202) before transmitting the transaction information to the consumer's bank/service provider. Preferably, speaker verification is performed using a text-independent speaker verification system based on a frame-by frame feature classification, for example, as is disclosed in U.S. Serial No. 08/788,471 filed on January 28, 1997 and entitled: "Text Independent Speaker Recognition for Transparent Command Ambiguity Resolution And Continuous Access Control," which is incorporated herein by reference. It is to be understood that other conventional forms of biometric verification (such as fingerprint, retinal, etc.) may be performed assuming, of course, that the communication device used by the consumer comprises suitable architecture. Clearly also, other authentication procedures such as PIN, password and/or smartcard can be used to authenticate the consumer.

Upon consumer authentication (step 202), the communication device (smartphone) will transmit the transaction information to a central server of the consumer's service provider/bank, wherein a second authentication procedure is performed (step 203). In particular, the central server will initially perform a user authentication process which is preferably a combination of PIN (personal identification number) and biometric authentication (e.g., speaker verification/speech recognition). Such biometric authentication may be performed by implementing a system which performs text- independent speaker verification and asks random questions, i.e., a combination of speech recognition, text independent speaker recognition and natural language understanding using acoustic and non-acoustic models to provide security from unauthorized access to the central server, for example, such as is disclosed in U.S. Patent No. 5,897,616 entitled: "Apparatus And Methods For Speaker Verification / Identification / Classification Employing Non-Acoustic And/Or Acoustic Models and Databases," which is incorporated herein by reference. Again, it is to be understood that any suitable authentication procedure may be utilized instead of the combination of speech and speaker recognition.

It is to be appreciated that in accordance with the transaction protocol described herein, the consumer does not need to swipe a credit card through the transaction terminal or otherwise provide credit card information to the vendor. Instead, the consumer will receive the unique ID tag based on the requested transaction, which is then forwarded to the service provider/bank of the consumer. The unique advantage of not having to communicate credit card information to the vendor eliminates consumer concerns with respect to the security of communicating credit card information over the Internet, for example. Instead, the consumer's account number from which the requested transaction is to be debited may be selected in one of various ways. For instance, assuming the consumer has registered various accounts with the service provider/bank, the consumer may select a desired account with the service provider using the communication device via dialog or DTMF with the central server. In addition, the account number may be predesignated based on the particular phone number dialed by the consumer to connect to the service provider and/or by the identity associated with a wireless phone (e.g., GSM and SIM cards). Alternatively, the consumer and service provider may agree a *priori* on a particular account number to be used for all transactions.

Examples of devices and protocols that may be used to exploit these transactions (e.g., steps 202 and/or 203) are described in U.S. Serial No. 09/008,122, filed on January 16, 1998, entitled: "A Portable Information and Transaction Processing System and Method Utilizing Biometric Authorization and Digital Certificate Authority" and U.S. Serial No. 08/873,079, filed on June 11, 1997, entitled "Portable Acoustic Interface For Remote Access To Automatic Speech/Speaker Recognition Servers", both of which are incorporated herein by reference. In particular, the above-incorporated U.S. Serial No. 09/008,122 describes a communication device that is capable of authenticating a user of such device and establishing communication with a central server to perform a remote financial transaction. In addition, U.S. Serial No. 08/873,079 describes a portable communication device having an acoustic coupler for connecting to, e.g., a phone. The portable communication device preprocesses the user's utterances (using various techniques) prior to transmitting such utterances over a communication channel so as to obtain increased decoding accuracy by an ASSR (automatic speech/speaker recognition) over the communication channel.

Once the consumer is authenticated by the central server (step 203), a transaction request will be transmitted to the central server of the vendor's service provider/bank to authorize the requested transaction (e.g., debit the consumer's account and credit the vendor's account in accordance with the dollar amount of petrol requested) and obtain a confirmation number (step 204). More specifically, the consumer's service provider/bank will compare the unique vendor ID number (included within the unique ID tag transmitted by the communication device of the consumer) with information stored in lookup tables of registered vendors so as to identify the vendor's service provider/bank and/or confirm the validity of the vendor. In addition, upon receiving the transaction request, the vendor's service provider/bank will confirm the identity and location of the vendor using the unique vendor ID number so as to ensure, for example, that the transaction terminal is legitimate and/or that the vendor has a clean record. Assuming the vendor is verified and the funds have been appropriately transferred between the consumer and vendor accounts, the vendors' service provider/bank will issue a confirmation number to the consumer's service provider. It is to be understood that the exchange between the bank/service provider of the consumer and vendor is mainly a confirmation that the appropriate funds have been transferred from the consumer's account to the vendor's account. This exchange may be performed with any conventional banking protocol, secure handshake or e-transaction protocol (such as SET).

Then, in accordance with a synchronous transaction, the confirmation number received from the vendor's service provider/bank is automatically transmitted to smartphone of the consumer (step 205) and then to the POS (transaction) terminal (step 206). Alternatively, the confirmation number can be transmitted from the consumer's service provider/bank to the transaction terminal. The POS terminal/merchant may then confirm that the payment transaction has been completed and that the confirmation number received from the consumer's communication device or bank is valid (step 207). Upon confirmation, the transaction (purchase, service) will be provided (step 208). In general, there are two modes by which the vendor can confirm the transaction (step 207). One mode of operation is referred to herein as the "notification mode." In the notification mode, the vendor's bank/service provider will automatically connect to the transaction terminal (via LAN, TCP/IP connection) and send the confirmation number to the transaction terminal. The vendor (transaction terminal) can then confirm the transaction by matching the confirmation number received from the consumer's communication device (or consumer's service provider/bank) with the confirmation number received from the vendor's service provider (without the need for another separate transaction).

Another mode of operation for confirming the transaction is referred to as the "pull mode." In this mode of operation, the transaction terminal (or vendor) will contact its service provider/bank (upon request of a transaction by the consumer) to request confirmation of the payment transaction. The vendor's service provider/bank will verify the identity of the vendor/POS terminal using any conventional secure authentication (such as digital certificates, PIN, passwords, originating phone number etc.) or biometric scheme (assuming the vendor places a call), such as the verification processes described above with respect to step 203. Assuming the transaction terminal (or vendor) has been authenticated, when the confirmation number is received from the consumer's communication device (or service provider/bank), the transaction terminal will transmit the confirmation number to vendor's bank/service provider for remote confirmation. Alternatively, the transaction terminal can download the confirmation number from the vendor's service provider/bank and match it locally with the confirmation number received from the consumer (local confirmation). In either mode of operation, however, it is to be appreciated that the transaction terminal only needs to interrogate its service provider or bank to determine whether the synchronous transaction is complete and authorized.

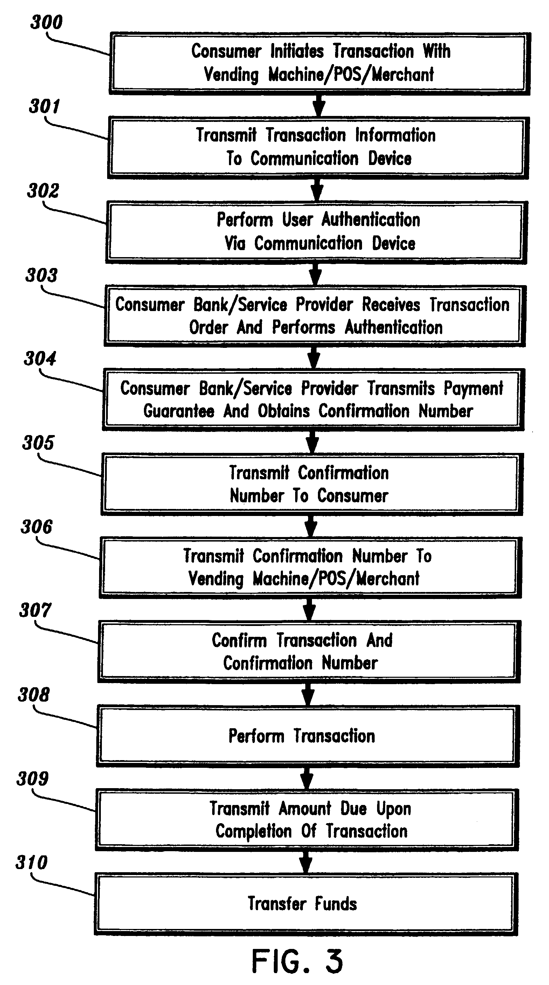

Referring now to Fig. 3, a flow diagram illustrates a method for performing a synchronous financial transaction according to another aspect of the present invention. In particular, the method of Fig. 3 illustrates an "open-ended" modality, whereby payment is settled after the completion of the transaction based on the amount due for a requested service or purchase. This is an alternative to the method of Fig. 2 wherein the amount due is known a *priori* and the funds are transferred between accounts before the completion of the transaction. Again, it is assumed (for purposes of illustration) that the communication device is a portable smartphone device and that the synchronous process is employed using a dynamic and spontaneous networking topology.

Continuing with the "petrol transaction" scenario described above, steps 300-303 are similar to steps 200-203 except in this instance, the transaction order is an open- ended amount (as opposed to a sum certain amount) because, for example, the consumer requests a fill-up.

Upon consumer authentication (step 303), the consumer's service provider/bank will transmit a transaction request in the form of a guaranty of payment (of the open- ended transaction) to the central server of the vendor's service provider/bank and obtain confirmation (step 304). It is to be understood that the confirmation in this respect represents that payment for the open-ended transaction is sufficiently guaranteed such that the transaction may commence (sufficiently guaranteed is to be understood as meaning that the consumer's account, at a minimum, has sufficient funds to cover the maximum expected amount for the transaction and that the consumer's service provider/bank has guaranteed that payment will be made if the cost of the transaction exceeds the maximum expected amount).

In accordance with a synchronous transaction, the confirmation number is then automatically transmitted to the transaction terminal thereby allowing the vendor to confirm the guaranty of payment and the confirmation number and provide the requested transaction (steps 305-308) in a manner similar to that discussed above with respect to Fig. 2 (steps 205-208).

After the transaction is complete (e.g., the petrol tank is filled), the amount due is transmitted back to the vendor's service/provider bank (step 309). The vendor's service provider/bank then transmits the amount due to the consumer's service provider/bank and the funds are transferred appropriately (step 310). Alternatively, the amount due can be transmitted directly to the communication device of the consumer, which then communicates the actual amount due to the service provider/bank of the consumer. The information that is transmitted is typically encrypted to prevent the consumer (or anyone else) from changing the amount.

It is to be appreciated that the payment guaranty (step 304, Fig. 3) may be provided through a third-party service provider (as opposed to the consumer's bank providing the guaranty of payment). With this approach, the maximum expected amount for the transaction can be debited from the consumer's account and transferred to a mutually agreed escrow service provider. The escrow service provider and/or the consumer's service provider/bank will confirm the escrow to the vendor's service provider/bank which, in turn, provides confirmation to the vendor that the transaction has been authorized and may proceed (as described above). After the completion of the transaction, the vendor will issue to the consumer an encoded ID number which comprises the amount due for the open ended transaction. The consumer utilizes the encoded ID number to "settle the escrow" (i.e., transfer the appropriate amount of the escrowed funds to the vendor's account). If the consumer does not "settle the escrow" using the encoded ID number within a given time period, the consumer may forfeit the full escrowed amount to the vendor. For instance, if the communication device of the consumer is unreachable or turned off, the customer may not be able settle the escrow or otherwise transmit the amount due as received by the vendor to complete the transaction. Consequently, the consumer may have to subsequently dispute any charges to his/her account if such charges are unjustified or incorrect.

The amount of time set for settling the escrow may vary based on the type of transaction. For instance, for goods or items purchased over the Internet, a sufficient amount of time should be given for delivery and consumer inspection of the goods. In this manner, it is to be appreciated that the escrow modality described herein provides a systematic way of protecting e-purchases by allowing the consumer to inspect purchased goods upon delivery. For instance, if the delivered goods are not acceptable, or if a requested service is not properly provided, the consumer can commence an investigation with the banks and/or third-party escrow (within the period allowed for settling the escrow) to determine whether the appropriate amount of the escrowed funds should be transferred to the vendor or whether the consumer should be reimbursed.

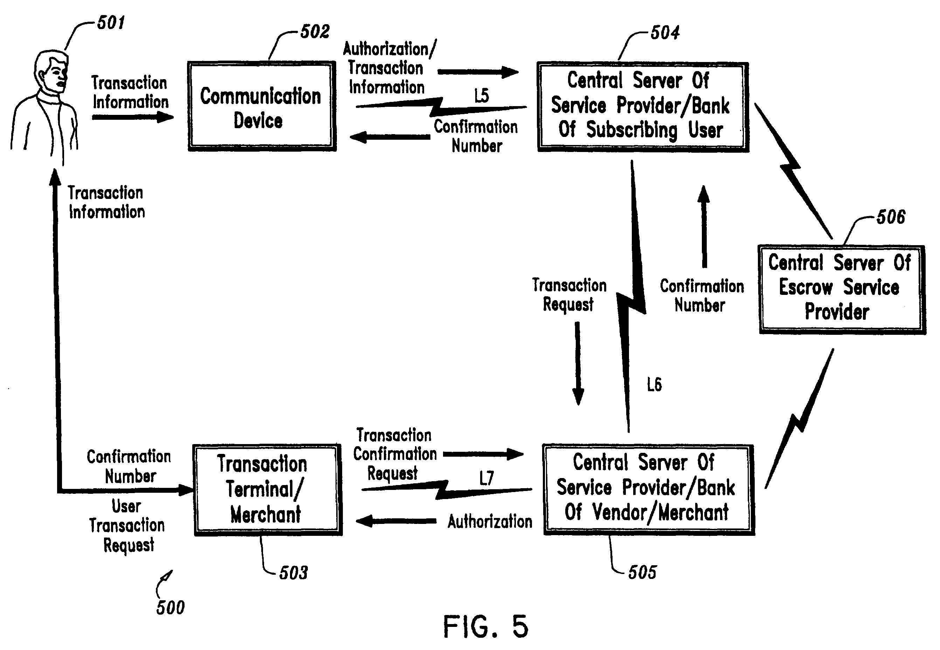

Referring now to Fig. 5, a block diagram illustrates a system for performing an asynchronous financial transaction according to an embodiment of the present invention. With an asynchronous transaction, the consumer will manually provide the vendor's confirmation number to the vendor/transaction terminal 503. This manual step may be required in situations, for example, when the consumer's communication device 502 is a conventional cellular phone that is not capable of directly establishing communication with the transaction terminal 503 and/or when the transaction terminal 503 is not a machine, but rather an individual (e.g., vendor/merchant). In this embodiment, it may be assumed that a consumer 502 is purchasing goods from a vendor 503 over a conventional telephone (communication device 502). The consumer 501 verbally obtains transaction information from the individual merchant 503 corresponding to the requested transaction (alternatively, the consumer can obtain the transaction information from a display of a transaction terminal). As explained above, the transaction information (unique ID tag) comprises information such as the unique vendor ID number, the type of transaction and/or the amount due, etc.

As with the system of Fig. 1, the consumer 501 can establish can establish communication (via communication link L5) with a central server system 504 of the service provider or bank of the consumer 501 using the communication device 502 and provide the transaction information. For example, the consumer can call the central server 504 using a conventional telephone and manually input the transaction information into the communication device 502 (e.g., via DTMF communication or voice). The transaction information manually input to the communication device 502 is transmitted to the central server 504 via communication link L5. The central server 504, in turn, connects (via communication link L6) to a central server 505 of the service provider or bank of the vendor 503. Communication link L6 can be established, for example, via dial-up connections through a telephone line via a modem over the Internet, an intranet or a local area network.

The central server 504 transmits a transaction request (including the transaction information) to the central server 505 of the vendor's service provider/bank via link L6. The central server 505 processes the request and generates a confirmation number if the transaction is authorized and payment is made (as discussed above). The confirmation number is transmitted to the consumer 501 via links L6 and L5 and the communication device 502. In asynchronous mode, the confirmation number is provided to the consumer (via voice from an operator or machine dialog, or via a display/GUI if the user uses a smartphone, etc.) who can then either manually enter it into the transaction terminal or verbally provide it to the merchant so as to authorize the transaction. The merchant, in this situation, can then connect to his/her service provider via communication link L7 (e.g., LAN, TCP/IP, phone call, etc.) to confirm the authorization number and transaction. Advantageously, since the merchant 503 can call his bank 505 (human or machine) to obtain a verbal confirmation of the transaction, the purchase information exchange protocols described herein may be extended to any currently existing infrastructure (and even individuals). Indeed, as explained in detail above, all that is required is a vendor ID number and a phone.

Furthermore, as with the system of Fig. 1, a central server 506 of an escrow service provider may be employed in instances when escrow transactions are requested. This escrow modality for asynchronous transactions will be explained below in greater detail. In addition, it is to be understood that the consumer's service provider/bank 504 and the vendor's service provider/bank 505 may be the same entity (as opposed to separate entities as illustrated in Fig. 5). In addition, the escrow service provider 506 may be a separate entity (as illustrated in Fig. 5) or combined into a single entity with either the service provider/bank of the consumer or vendor (or both) (although it is preferred that the escrow service provider be an independent third-party).

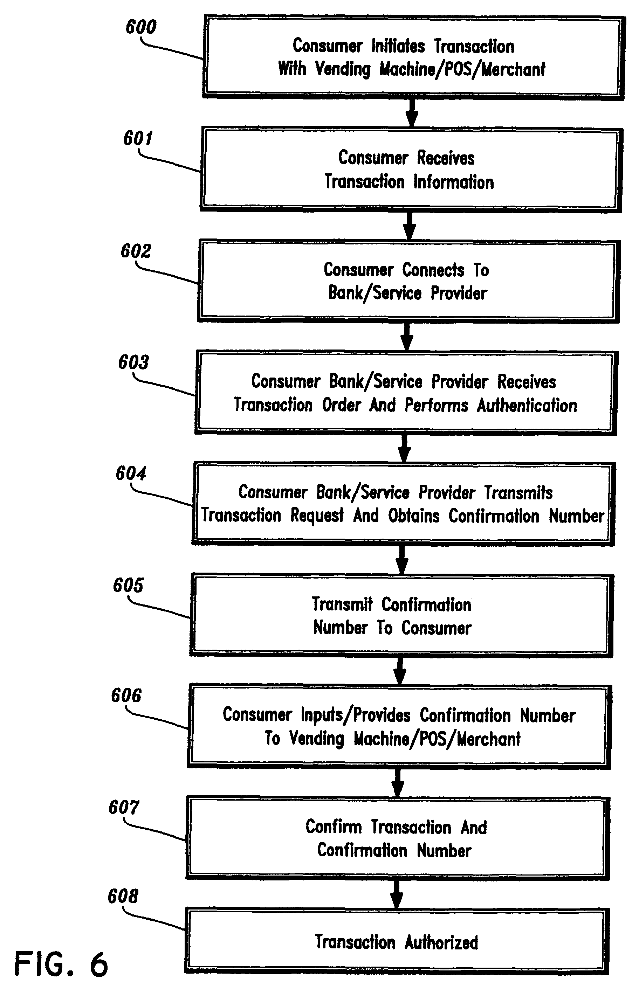

Referring now to Fig. 6, a flow diagram illustrates a method for performing an asynchronous financial transaction according to one aspect of the present invention. Initially, the consumer will commence a transaction with a transaction terminal or vendor (step 600). Then, the consumer will receive transaction information which is, for example, displayed on a screen of the terminal or spoken by a vendor (step 601). The consumer will then connect to his/her bank/service provider (central server) using the portable communication device (step 602). For instance, as explained above, the consumer may call the bank/service provider using a regular or cellular phone and provide the transaction information using DTMF (IVR) or voice (with a human operator).

The central server will receive the transaction information and perform a user authentication process (step 603) which is preferably a combination of PIN (personal identification number) and biometric authentication (e.g., speaker verification/speech recognition) as described in the above-incorporated U.S. Serial No. 08/871,784 (and such as described above with respect to step 203 of Fig. 2). Once the consumer is authenticated (step 603), a transaction request will be transmitted to the central server of the vendor's service provider/bank to perform the requested transaction and obtain a confirmation number (step 604). In particular, as explained above, this involves verifying the identity and location of the vendor using the unique vendor ID number, exchanging funds between the accounts of the consumer and vendor based on the transaction request, and issuing a confirmation number by the vendor's service provider/bank to the consumer's service provider/bank (such as described above in step 204 of Fig. 2). The confirmation number received from the vendor's service provider is then transmitted to consumer (step 605) (e.g., via synthesized voice (or human operator voice) or a text message) over link L5 to the consumer's communication device (e.g., cellular phone, or via GUI on a display of the cellular phone, etc.) The consumer will then input the confirmation number into the transaction terminal or verbally provide it to the vendor (step 606). The POS terminal/vendor may then confirm the transaction and confirmation number (step 607) in the manner discussed above with respect to step 207 of Fig. 2. Upon confirmation, the POS terminal or vendor will provide the requested service or merchandise (step 608).

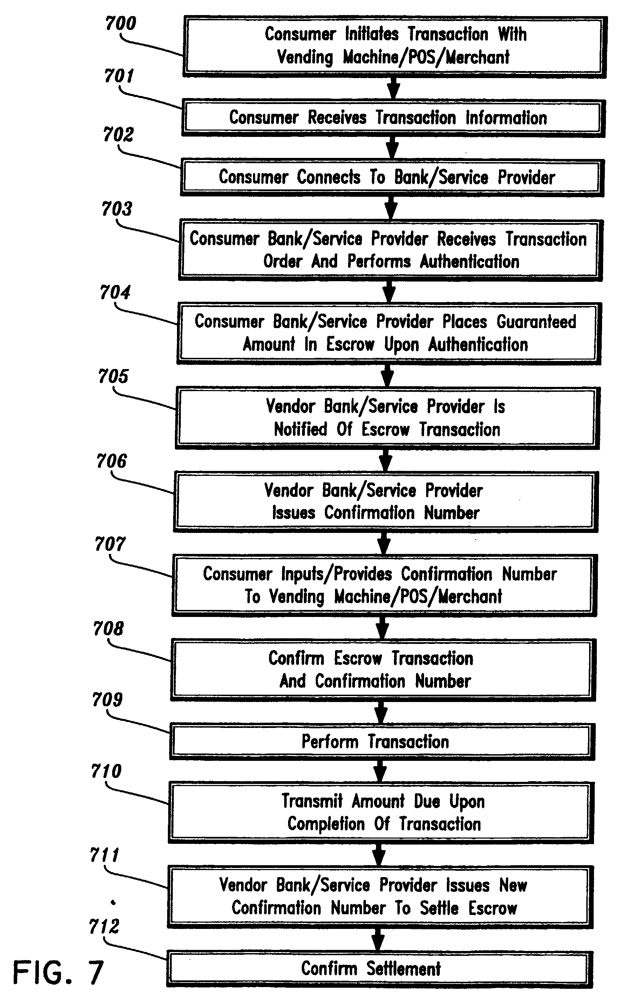

Referring now to Fig. 7, a flow diagram illustrates a method for performing an asynchronous financial transaction according to another aspect of the present invention. In particular, the method of Fig. 7 illustrates an "open-ended" modality in an asynchronous transaction, whereby payment is settled after the completion of the transaction based on the amount due for a requested service or purchase. Again, this is an alternative to the method of Fig. 6 wherein the amount due is known a *priori* and the funds are transferred between accounts before the completion of the transaction.

In Fig. 7, steps 700-703 are similar to steps 600- 603 in Fig. 6, except in this instance, the transaction order is an open-ended amount (as opposed to a sum certain amount). Upon consumer authentication (step 703), the consumer's service provider/bank will place a guaranteed amount of money in escrow (for the open-ended transaction) with a central server of a third-party escrow service provider/bank (step 704). Alternatively, the consumer's service provider/bank may provide a payment guaranty to the vendor's service provider/bank (as described above with respect to Fig. 3), although the third-party escrow transaction is preferred so as to prevent special treatment in case of a dispute and either the consumer or vendor is a consumer of the third-party escrow service provider.

Then, the vendor's service provider/bank is provided notice of the escrow transaction (step 705). This notice may be provided by the third-party escrow service provider or by the consumer's service provider/bank (or both). Upon notification, the vendors' service provider/bank will verify the vendor using the unique vendor ID number (as discussed above) and then issue a confirmation number to confirm that the escrow transaction has been performed and that the vendor is authentic (step 706). The confirmation number is then transmitted to the consumer's service provider/bank and then to the consumer. Then, in accordance with an asynchronous transaction, the consumer will input/provide the confirmation number to the transaction terminal/vendor (step 707) so that the vendor can confirm the escrow transaction, as well as the authenticity of the confirmation number (step 708). Upon confirmation, the transaction will commence (step 709).

Upon completion of the transaction, the amount due will be transmitted to the vendor's service provider/bank (step 710), which then issues a new confirmation number (or new ID number) that contains the amount due so as to settle the portion of the escrow (if any) that is to be credited back to the consumer's account (step 711). More particularly, the consumer receives the new ID number and then communicates it to his/her service provider/bank to confirm the authorization. The consumer's service provider/bank then transmits the confirmation to the escrow service provider which, in turn, transfers the correct amount (as contained in the ID number) to the vendor's account. The vendor's service provider/bank then checks that the proper amount has been transferred (based on the amount contained in the new ID number) and confirms payment and settlement to the vendor (step 712) as described above. Upon confirmation, the remaining money (if any) (i.e., for an open-ended transaction) is then transferred back to the consumer's account from the escrow service provider. Typically, if the consumer does not communicate the new ID number, the entire escrow amount is forfeited.

It is to be understood that assuming the escrow is an internal service provided by the consumer's service provider/bank, the escrow transaction will appear as a payment guaranty to the vendor, that is, the consumer's bank will pay the amount due unless, of course, there is a valid dispute entered and fault is found on part of the vendor.

It is to be appreciated that the systems and methods of the present invention described above are equally applicable for performing peer-to-peer or individual-to- individual cashless transactions. For example, the present invention may be used to provide personal payment from one individual to another individual. In particular, individual A can provide his/her personal identification number to individual B. Individual B can then use a conventional telephone to call his/her bank to authorize the transfer of a particular amount of money to the account of Individual A. Individual A can then receive confirmation by his/her bank by, e.g., receiving a page or by calling his/her bank. Another example is that individual A can place an order for a particular item or service over the telephone with individual B (vendor) and obtain a reference number from individual B (assuming B is registered). Individual A can then use the reference number to authorize the transaction by calling his/her bank and providing the reference number to the bank. Individual B can then execute the telephone order upon receiving confirmation that the transaction has been authorized by the service provider (e.g., the banks of A and B).

The present invention is a generalization of the concept of secure electronic transaction services. From an e-transaction point of view, it is fundamentally different from conventional methods because the transaction is immediately performed and confirmable by the service provider or bank of the vendor. In addition, the vendor does not need to deploy his own secure server for interacting with a consumer, nor does the vendor need to integrate his business logic with the consumer or the consumer's service provider/bank to complete the sale. In fact, a contractual relationship between the vendor and consumer's service provider/bank is not even necessary. Indeed, the vendor can rely solely on his service provider/bank to provide an appropriate unique identification number and perform the necessary notification or confirmation of a transaction.

It is to be appreciated that there are many advantages associated with the system and methods described herein in accordance with the present invention. For instance, the purchase information exchange protocols reduce the financial costs to the vendor and consumer by eliminating the need for consumer/vendor enrollment in expensive programs. In addition, the present invention eliminates the complex logistics associated with, as well as the equipment needed for, performing credit card payment transactions. Indeed, the service can be provided at a very low subscription price or on a transaction by transaction basis, without any need for subscription. No registration procedure is required other than the vendor having to register an identification number. Moreover, the consumer (or individual) does not have to own or otherwise utilize an expensive or complex client since a conventional telephone can be used. Another advantage is that the present invention allows credit card transactions to be performed between consumer-vendor and individual-individual without a consumer/individual actually having to physically posses and provide credit card information to either the vendor or the individual to whom payment is to be made. Furthermore, the present invention may be readily implemented without requiring any modification of the current infrastructure.

Although illustrative embodiments have been described herein with reference to the accompanying drawings, it is to be understood that the present system and method is not limited to those precise embodiments, and that various other changes and modifications may be affected therein by one skilled in the art within the scope of the invention as defined by the appended claims.

## Claims

1. A method for performing a financial transaction, comprising the steps of:
commencing a financial transaction between a vendor and a consumer;
receiving transaction information from the vendor based on the financial transaction, the transaction information comprising a unique identification tag associated with the vendor;
providing the received transaction information to a first service provider associated with the consumer;
authorizing the financial transaction by the first service provider and a second service provider associated with the vendor using the unique identification tag; and
confirming the authorizing of the financial transaction.

2. A method for performing a financial transaction, comprising the steps of:
requesting by a consumer a financial transaction with a transaction terminal;
transmitting transaction information from the transaction terminal to a communication device of the consumer based on the requested financial transaction, the transaction information comprising a unique identification tag associated with the transaction terminal;
transmitting the transaction information from the communication device to a first service provider associated with the consumer;
authorizing the financial transaction by the first service provider and a second service provider associated with the transaction terminal using the unique identification tag; and
confirming the authorizing of the financial transaction.

3. A system for performing a financial transaction, comprising:
a transaction terminal for commencing a financial transaction at the request of a consumer and providing transaction information to the consumer based on the financial transaction, the transaction information comprising a unique identification tag associated with the transaction terminal;
at least one server associated with a service provider of the consumer and the transaction terminal; and
a communication device for transmitting the transaction information to the at least one server, wherein the at least one server comprises means for authorizing the financial transaction using the unique identification tag and means for issuing a confirmation number for an authorized transaction.

4. A method according to claim 1 or 2, or a system according to claim 3 wherein the unique identification tag comprises a unique vendor or transaction terminal identification number assigned respectively to the vendor or transaction terminal.

5. A method or a system according to claim 4, wherein the unique identification tag further comprises one of location information of the vendor or transaction terminal, transaction type information indicating the nature of the financial transaction, an amount due for the financial transaction, and a combination thereof.

6. A method according to any of claims 1, 2, 4 or 5, wherein the first service provider and the second service provider are the same entity.

7. A method according to claim 1 or any of claims 4 to 6 appended to claim 1, wherein the step of providing the received transaction information to the first service provider comprises the steps of:
authenticating the identity of the consumer; and
accepting the transaction information if the identity of the consumer is authenticated.

8. A method according to claim 2 or any of claims 4 to 6 appended to claim 2, wherein the step of transmitting the transaction information to the first service provider comprises the steps of:
authenticating the identity of the consumer using the communication device, and transmitting the transaction information to the first service provider if the identity of the consumer is authenticated by the communication device;
authenticating the identity of the consumer by the first service provider; and
accepting the transmitted transaction information if the identity of the consumer is authenticated by the first service provider.

9. A system according to any of claims 3 to 5, wherein the transaction terminal, the communication device and the at least one server are spontaneously and dynamically network connected.

10. A system according to any of claims 3 to 5 or 9, further comprising an escrow server associated with an escrow service provider for providing escrow services on behalf of the transaction terminal and the consumer. .
